# FASCICULE DE BREVET EUROPEEN

(11) **EP 3 789 898 B1**
(45) Date de publication et mention de la délivrance du brevet: **09.07.2025**
(21) Numéro de dépôt: 20194257.0
(22) Date de dépôt: 03.09.2020
(51) Int. Cl.: H04L 9/40, G06F 21/57, G06F 21/60, H04L 9/08

(54) **PROCÉDÉ DE GÉNÉRATION D'UNE CLÉ**
VERFAHREN UM EINEN SCHLÜSSEL ZU GENERIEREN
METHOD FOR GENERATING A KEY

(30) Priorité: 06.09.2019 FR 1909823
(43) Date de publication de la demande: 10.03.2021
(73) Titulaire: STMicroelectronics (Grand Ouest) SAS, 72100 Le Mans (FR)
(72) Inventeur: RUELLE, Frederic, 72220 MARIGNE-LAILLE (FR)
(74) Mandataire: Cabinet Beaumont

(56) Documents cités:
- KR-A- 20090 051 475
- US-A1- 2006 005 046
- US-A1- 2017 115 984

## Description

### Domaine technique

La présente description concerne de façon générale les procédés de protection d'un système électronique et plus précisément les procédés de génération de clés de cryptage et/ou de chiffrement.

### Technique antérieure

La cryptographie est une discipline s'attachant entre autres à protéger des messages transmis entre deux dispositifs électroniques ou des contenus (assurant confidentialité, authenticité et intégrité) en s'aidant de clés de chiffrement ou de cryptage. Les clés permettent de crypter et de décrypter les messages. Les personnes ne possédant pas les clés correctes ne peuvent ainsi pas comprendre le message.

US 2006/005046 A1 divulgue la génération d'une clé symétrique pour décrypter un programme de mise à jour à partir d'informations présentes en clair dans le programme et le programme installé. KR 2009 0051475 A divulgue la génération d'une clé symétrique pour décrypter un programme de mise à jour à partir de son numéro de version et une clé symétrique sécrète du programme installé. US 2017/115984 A1 divulgue un procédé de génération d'une clé symétrique pour décrypter un programme de mise à jour, dans lequel la clé symétrique est décryptée à partir du programme de mise à jour et d'une donnée secrète détenue par le dispositif électronique. 1

### Résumé de l'invention

L'invention consiste en un procédé, un circuit électronique et un système électronique tels que définis dans le revendications.

Un mode de réalisation prévoit un procédé de génération d'une clé symétrique, dans lequel la clé symétrique est générée par un dispositif électronique en fonction d'un programme de mise à jour d'un logiciel et d'une valeur secrète détenue par le dispositif électronique.

Selon un mode de réalisation, le procédé comprend la réception par le dispositif du programme de mise à jour du logiciel transmis par un serveur.

Selon un mode de réalisation, le programme de mise à jour est crypté.

Selon un mode de réalisation, la clé symétrique est aussi générée par le serveur.

Selon un mode de réalisation, le procédé comprend une étape de génération d'un premier mot représentatif du programme de mise à jour.

Selon un mode de réalisation, le premier mot est représentatif du programme de mise à jour décrypté.

Selon un mode de réalisation, le procédé comprend une étape de génération d'au moins un deuxième mot, le deuxième mot étant représentatif de la valeur secrète.

Selon un mode de réalisation, la clé symétrique est générée en appliquant une fonction de dérivation de clé au premier mot et à au moins un des deuxièmes mots,

Selon un mode de réalisation, la clé symétrique est générée en appliquant une fonction de dérivation de clé à un troisième mot représentatif du premier mot et d'un des deuxièmes mots.

Selon un mode de réalisation, la génération d'un mot est effectuée par une fonction à sens unique.

Selon un mode de réalisation, la génération d'un mot est effectuée par une fonction de hachage.

Selon un mode de réalisation, la valeur secrète est une clé ayant été écrite dans une mémoire non volatile lors de la programmation initiale du logiciel.

Selon un mode de réalisation, la valeur secrète est une clé ayant été générée lors d'une mise à jour précédente du logiciel.

Selon un mode de réalisation, la valeur secrète est un identifiant du dispositif.

Un autre mode de réalisation prévoit un circuit électronique comprenant des moyens pour mettre en oeuvre le procédé décrit précédemment.

Un autre mode de réalisation prévoit un système électronique, comprenant un serveur et au moins un dispositif électronique, le serveur et les au moins un dispositif électronique comprenant un circuit tel que décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un système de dispositifs électroniques du type auquel s'appliquent les modes de réalisation décrits ;
la figure 2 illustre, sous forme de blocs, un mode de réalisation d'un procédé de génération d'une clé ;
la figure 3 illustre, sous forme de blocs, un autre mode de réalisation d'un procédé de génération d'une clé ;
la figure 4 illustre, sous forme de blocs, un autre mode de réalisation d'un procédé de génération d'une clé ;
la figure 5 illustre, sous forme de blocs, un autre mode de réalisation d'un procédé de génération d'une clé ; et
la figure 6 illustre un exemple de situation fonctionnelle d'un système du type de celui de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, Les éléments pouvant être utilisés pour la transmission des messages, par exemple entre des dispositifs électroniques et un serveur, ne seront pas détaillés, les modes de réalisation décrits étant compatibles avec tous les éléments de transmission connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

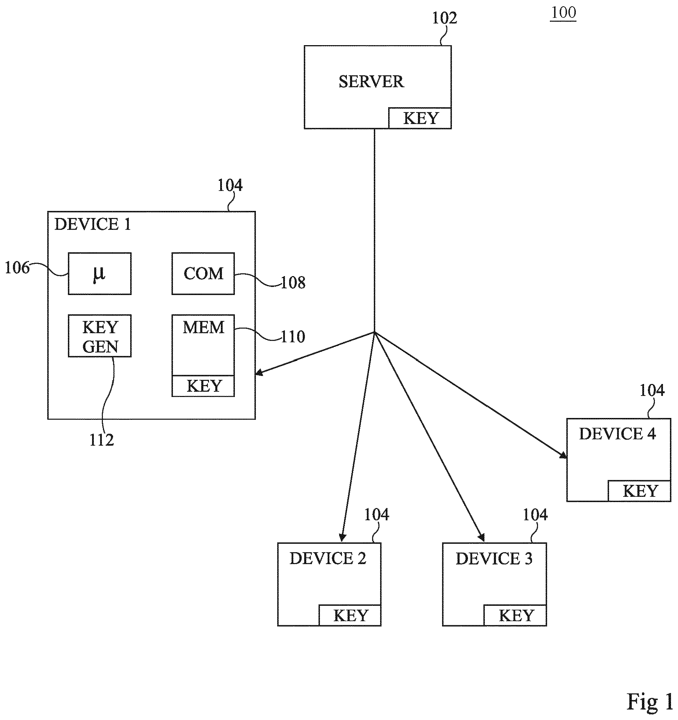

La figure 1 représente un système de dispositifs électroniques du type auquel s'appliquent les modes de réalisation décrits.

La figure 1 représente un système électronique 100 comprenant des dispositifs électroniques. Plus précisément, le système 100 comprend un serveur 102 (SERVER) et des dispositifs 104 (DEVICE1, DEVICE2, DEVICE3, DEVICE4). Le système électronique 100 comprend au moins un dispositif 104, de préférence au moins deux dispositifs 104. Bien qu'un seul dispositif 104 (DEVICE1) soit détaillé, les dispositifs 104 sont de préférence similaires.

Les dispositifs 104 sont configurés pour pouvoir recevoir des données du serveur 102, et éventuellement, pour pouvoir envoyer des données au serveur 102. Le serveur 102 transmet régulièrement des mises à jour logiciel aux dispositifs 104. Les dispositifs 104 peuvent être, éventuellement, configurés pour transmettre des données entre eux sans passer par le serveur 102.

Les données transmises entre les dispositifs 104 et le serveur 102 ou entre les dispositifs 104 sont de préférence cryptées de manière à les protéger des pirates ou des tiers qui chercheraient à les obtenir de manière illégitime. Pour crypter les données transmises, le serveur 102 et les dispositifs 104 comprennent chacun au moins une clé de cryptage (KEY).

De préférence, les clés de cryptage et/ou de chiffrement sont des clés symétriques. Ainsi, par exemple lors d'une transmission de données entre le serveur 102 et un ou plusieurs des dispositifs 104, le serveur 102 crypte les données à l'aide d'une clé de cryptage symétrique et le ou les dispositifs 104 la décryptent, après réception, à l'aide de la même clé que celle qui a permis le cryptage du message.

Les dispositifs 104 ont par exemple tous la même clé pour crypter/décrypter les données transmises entre les dispositifs 104 et le serveur 102. Le serveur 102 peut alors ne comprendre qu'une unique clé pour crypter/décrypter les données transmises avec les dispositifs 104.

A titre de variante, les dispositifs 104 peuvent avoir chacun leur propre clé de cryptage. Le serveur 102 possède alors autant de clés de cryptage que le système comprend de dispositifs 104. Des données à transmettre sont alors cryptées avec la clé correspondant au dispositif 104 auquel sont destinées les données. Lorsque l'on souhaite transmettre des données à tous les dispositifs 104, chaque dispositif 104 reçoit les données cryptées avec sa clé de cryptage.

Alternativement, le serveur 102 et les dispositifs 104 peuvent comprendre des clés privées et des clés publiques permettant de crypter/décrypter des données de manière asymétrique.

On peut chercher, pour diverses raisons, à modifier régulièrement la ou les clés, par exemple pour s'assurer qu'elles ne sont pas connues d'un tiers. Cependant, il est risqué, du point de vue de la sécurité informatique, de transmettre directement une nouvelle clé de cryptage, même cryptée, particulièrement s'il y a un risque que la clé précédente ne soit plus sécurisée.

Les dispositifs 104 comprennent par exemple chacun :
- un processeur 106 (µ),
- un circuit de communication 108 (COM) configuré pour permettre la transmission de données entre le dispositif 104 et un circuit externe au dispositif 104, par exemple le serveur 102,
- une ou plusieurs mémoires 110 (MEM), dont une mémoire non volatile et éventuellement une mémoire volatile (par exemple une mémoire RAM), comprenant, entre autres, la ou les clés de cryptage et/ou de chiffrement et un ou plusieurs programmes du logiciel du dispositif, et
- un circuit 112 (KEY GEN) représentant les parties du dispositif configurées pour générer la nouvelle clé.

La génération, par le circuit 112, de la nouvelle clé est par exemple effectuée par l'intermédiaire d'un logiciel, dans lequel cas le circuit 112 comprend un processeur, par exemple le processeur 106 ou un autre. La génération, par le circuit 112, de la nouvelle clé peut aussi par exemple être effectuée par l'intermédiaire du matériel ("hardware" en anglais), c'est-à-dire par exemple par l'intermédiaire de circuits et portes logiques, dans lequel cas le circuit 112 comprend le matériel utilisé.

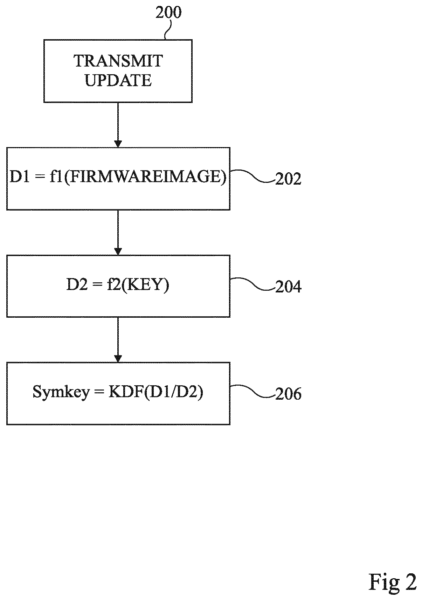

Des modes de réalisation de procédés de génération de clés symétriques sont décrits en relation avec les figures 2 à 5. Les clés symétriques générées peuvent être des clés de cryptage et/ou des clés de chiffrement. Un élément commun à l'ensemble des modes de réalisation décrits est qu'ils comprennent la génération locale d'une clé en fonction de la mise à jour logiciel. Ces procédés sont de préférence appliqués à chaque fois qu'un dispositif 104 reçoit un programme de mise à jour logiciel (par exemple "Firmware image" en anglais).

La figure 2 représente un mode de réalisation d'un procédé de génération, ou de mise à jour, d'une clé symétrique. La clé est générée à partir d'un programme de mise à jour logiciel et d'une valeur secrète, ici une clé précédente.

Le procédé de génération, ou de mise à jour, comprend une étape 200 (TRANSMIT UPDATE) au cours de laquelle le serveur 102 (figure 1) fournit un programme de mise à jour logiciel à tous les dispositifs 104. Le programme transmis a été crypté par une clé de cryptage, de préférence une clé symétrique n'étant utilisée que pour la transmission de mises à jour, par exemple une clé fournie au dispositif lors de sa programmation initiale, et stockée dans une mémoire non volatile. La clé générée par le procédé décrit ici ne sera pas, de préférence, utilisée pour la transmission de mises à jour, mais pour la transmission d'autres messages. Plus précisément, la clé générée par le procédé décrit ici n'est, de préférence, pas utilisée pour décrypter le programme de mise à jour. Comme décrit précédemment, si les différents dispositifs ont chacun leur propre clé symétrique, le programme est crypté séparément pour chaque dispositif avec la clé correspondante.

Le programme de mise à jour transmis durant l'étape 200 est par exemple disponible aux dispositifs 104 pendant une période donnée. Ainsi, les dispositifs peuvent l'obtenir, ou le télécharger, et le décrypter avec leur clé symétrique, durant cette période. Ainsi, le serveur 102 conserve par exemple la ou les clés courantes au moins durant toute cette période.

Le procédé de la figure 2 sera, par la suite, décrit en ne considérant que le serveur 102 et un unique dispositif 104. Il est bien entendu que ce procédé est mis en oeuvre parallèlement par tous les dispositifs 104 lorsqu'ils reçoivent une mise à jour logiciel.

Au cours d'une étape 202 (D1 = f1(FIRMWAREIMAGE)) suivante, un mot D1 représentatif du programme de mise à jour est généré par le dispositif 104 en appliquant une fonction f1() au programme de mise à jour logiciel. La fonction f1() est de préférence une fonction à sens unique, c'est-à-dire une fonction dont la valeur d'entrée est impossible, à obtenir à partir du résultat. La fonction f1() est par exemple une fonction de hachage, par exemple la fonction dite SHA256. La fonction f1() est par exemple une fonction de génération d'une signature.

De préférence, le programme de mise à jour logiciel est décrypté en utilisant la clé symétrique courante et la fonction f1() est appliquée au programme décrypté. Cela permet de rendre plus difficile pour un pirate d'obtenir le mot D1, même si la transmission du programme de mise à jour logiciel est interceptée. Alternativement, la fonction f1() peut être appliquée au programme crypté de la mise à jour logiciel.

Au cours d'une étape 204 (D2 = f2(KEY)) suivante, un mot D2 représentatif d'une clé symétrique précédente est généré en appliquant une fonction f2() à une clé symétrique précédente.

La clé précédente est par exemple une clé fournie au dispositif 104 lors de la programmation initiale du système, par exemple une clé OEM (Original Equipement Manufacturer), différente de la clé utilisée pour la transmission des mises à jour. Cette même clé précédente est par exemple utilisée pour générer le mot D2 à chaque mise à jour logiciel.

La clé précédente est par exemple une clé ayant été générée lors la mise à jour logiciel précédente, par le même procédé de génération d'une clé symétrique.

La fonction f2() est de préférence la même fonction que la fonction f1(). La fonction f2() peut cependant être une autre fonction, de préférence une fonction à sens unique, par exemple une autre fonction de hachage, par exemple une autre fonction de génération d'une signature.

Les étapes 202 et 204 sont, bien entendu, interchangeables. Ainsi, il est possible de mettre en oeuvre l'étape 204 avant l'étape 202. Il est aussi possible de mettre en oeuvre les étapes 202 et 204 simultanément.

Au cours d'une étape 206 (Symkey = KDF(D1/D2) suivante, la nouvelle clé symétrique (SymKey), c'est-à-dire la clé symétrique mise à jour, est générée à partir des mots D1 et D2 en appliquant une fonction de dérivation d'une clé KDF() aux mots D1 et D2. Par exemple, la fonction KDF() peut être appliquée à la concaténation D1/D2 des mots D1 et D2.

La fonction de dérivation d'une clé KDF() est par exemple une fonction de dérivation d'une clé par hachage, dite "HKDF" (de l'anglais "Hash Key Derivation Function"). La fonction de dérivation d'une clé KDF() est par exemple une fonction de génération d'une signature.

Le serveur 102 effectue, avant ou après l'étape 200 de transmission du programme de mise à jour logiciel, les étapes 202, 204 et 206 à partir des mêmes éléments (clés, programme crypté ou décrypté) pour obtenir la même clé.

Lorsque l'on considère tous les dispositifs 104 du système 100, les dispositifs 104 mettent de préférence tous en oeuvre le même procédé. Cependant, il est possible que les dispositifs 104 mettent en oeuvre le procédé avec des clés précédentes KEY différentes. Les dispositifs 104 obtiennent donc tous une nouvelle clé SymKey qui leur est propre.

Dans le cas où chaque dispositif 104 obtient une clé qui lui est propre, le serveur 102 met en oeuvre le procédé autant de fois qu'il y a de dispositifs 104 de manière à générer les nouvelles clés de tous les dispositifs 104.

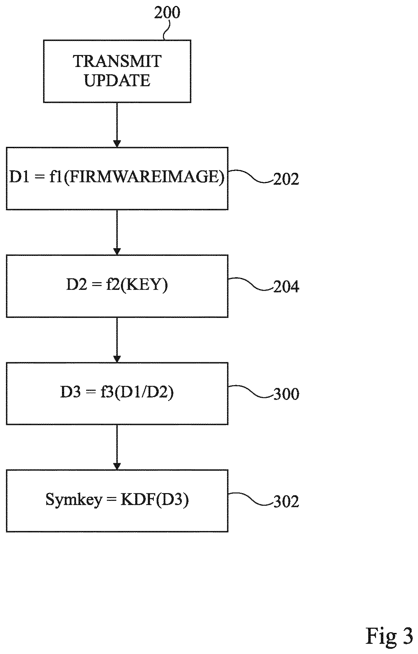

La figure 3 représente un autre mode de réalisation d'un procédé de génération, ou de mise à jour, d'une clé symétrique. La clé est générée à partir d'un programme de mise à jour logiciel et d'une valeur secrète, ici une clé précédente.

Le procédé de la figure 3 comprend des étapes similaires à celles du procédé de la figure 2. En particulier, le procédé de la figure 3 comprend, pour chaque dispositif 104 :
- l'étape 200 au cours de laquelle le programme crypté de la mise à jour logiciel est transmis par le serveur 102 aux dispositifs 104 du système 100, ce programme étant ensuite décrypté par chaque dispositif 104 ;
- l'étape 202 au cours de laquelle le mot D1 représentatif du programme de mise à jour logiciel est généré en appliquant la fonction f1() au programme crypté ou décrypté de la mise à jour logiciel ; et
- l'étape 204 au cours de laquelle le mot D2 représentatif de la clé de cryptage précédente est généré en appliquant la fonction f2() à la clé précédente.

Comme cela a été décrit précédemment, les étapes 202 et 204 sont, bien entendu, interchangeables. Ainsi, il est possible de mettre en oeuvre l'étape 204 avant l'étape 202. Il est aussi possible de mettre en oeuvre les étapes 202 et 204 simultanément.

Le procédé de la figure 3 comprend ensuite une étape 300 (D3 = f3(D1/D2)) au cours de laquelle un mot D3 représentatif des mots D1 et D2 est généré. Le mot D3 est obtenu en appliquant une fonction f3() aux mots D1 et D2, par exemple à la concaténation D1/D2 des mots D1 et D2.

La fonction f3() est par exemple la même fonction que la fonction f1() et/ou la fonction f2(). La fonction f3() est par exemple une autre fonction à sens unique. La fonction f3() est par exemple une fonction permettant d'assurer que le mot D3 a une taille inférieure à la concaténation D1/D2 des mots D1 et D2, par exemple ayant la même taille que le mot D1 et/ou que le mot D2.

Au cours d'une étape 302 (Symkey = KDF(D3)) suivante, la nouvelle clé de cryptage SymKey est obtenue en appliquant la fonction de dérivation d'une clé KDF() au troisième mot D3.

Le serveur 102 effectue, avant ou après l'étape 200 de transmission du programme de mise à jour logiciel, les étapes 202, 204, 300 et 302 à partir des mêmes éléments (clés, programme crypté ou décrypté) pour obtenir la ou les mêmes clés.

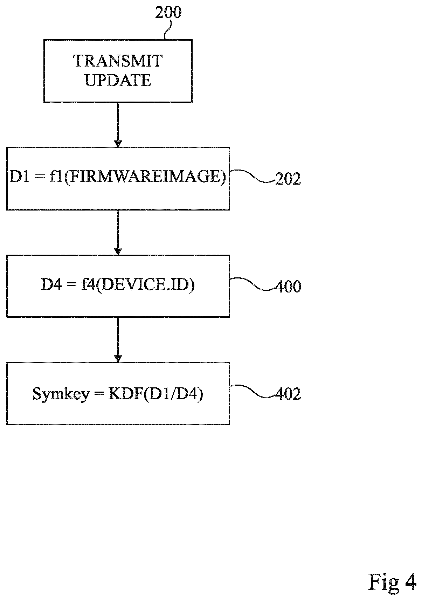

La figure 4 représente un autre mode de réalisation d'un procédé de génération, ou de mise à jour, d'une clé symétrique. La clé est générée à partir d'un programme de mise à jour logiciel et d'une valeur secrète, ici un mot secret.

Le procédé de la figure 4 comprend des étapes similaires à celles des procédés des figures 2 et 3. En particulier, le procédé de la figure 4 comprend, pour chaque dispositif 104 :
- l'étape 200 au cours de laquelle le programme crypté de la mise à jour logiciel est transmis par le serveur 102 aux dispositifs 104 du système 100, ce programme étant ensuite décrypté par chaque dispositif 104 ; et
- l'étape 202 au cours de laquelle le mot D1 représentatif du programme de mise à jour logiciel est généré en appliquant la fonction f1() au programme crypté ou décrypté de la mise à jour logiciel.

Au cours d'une étape 400 (D4 = f4(DEVICE.ID)) suivante, un mot D4 est généré par chaque dispositif 104. Les mots D4 générés par les dispositifs 104 peuvent être tous différents les uns des autres. En effet, chaque mot D4 est représentatif d'un mot secret de préférence connu uniquement par le serveur 102 et le dispositif 104 correspondant. Chaque mot D4 est généré en appliquant une fonction f4() au mot secret.

Le mot secret est par exemple un numéro d'identification du dispositif 104 (DEVICE.ID). Le numéro d'identification peut par exemple être déterminé et programmé lors de la programmation initiale du système. A titre de variante, le numéro d'identification peut être une fonction physique non clonable (PUF - "Physical Unclonable Function"), c'est-à-dire de préférence un numéro aléatoire associé à un dispositif électronique par une caractéristique physique.

La fonction f4() est par exemple la même fonction que la fonction f1(). La fonction f4() est par exemple une autre fonction à sens unique. La fonction f4() est par exemple une fonction de hachage. La fonction f4() est par exemple une fonction de génération d'une signature.

Les étapes 202 et 400 sont, bien entendu, interchangeables. Ainsi, il est possible de mettre en oeuvre l'étape 400 avant l'étape 202. Il est aussi possible de mettre en oeuvre les étapes 202 et 400 simultanément.

Au cours d'une étape 402 (Symkey = KDF(D1/D2) suivante, la nouvelle clé symétrique (SymKey), c'est-à-dire la clé symétrique mise à jour, est générée à partir des mots D1 et D4 en appliquant une fonction de dérivation d'une clé KDF() aux mots D1 et D4. Plus précisément, la fonction KDF() peut être appliquée à la concaténation D1/D4 des mots D1 et D4.

La fonction de dérivation d'une clé KDF() est par exemple une fonction de dérivation d'une clé par hachage, dite HKDF. La fonction de dérivation d'une clé KDF() est par exemple une fonction de génération d'une signature.

Le serveur 102 effectue, avant ou après l'étape 200 de transmission du programme de mise à jour logiciel, les étapes 202, 400 et 402 à partir des mêmes éléments (clés, programme crypté ou décrypté) pour obtenir les mêmes clés.

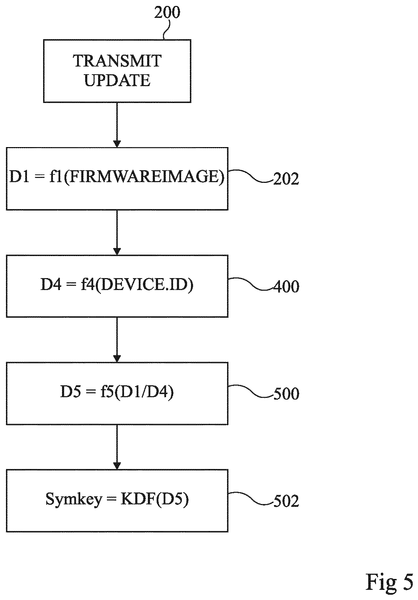

La figure 5 représente un autre mode de réalisation d'un procédé de génération, ou de mise à jour, d'une clé symétrique. La clé est générée à partir d'un programme de mise à jour logiciel et d'une valeur secrète, ici un mot secret.

Le procédé de la figure 5 comprend des étapes similaires à celles du procédé de la figure 4. En particulier, le procédé de la figure 5 comprend, pour chaque dispositif 104 :
- l'étape 200 au cours de laquelle le programme crypté de la mise à jour logiciel est transmis par le serveur 102 aux dispositifs 104 du système 100, ce programme étant ensuite décrypté par chaque dispositif 104 ;
- l'étape 202 au cours de laquelle le mot D1 représentatif du programme de mise à jour logiciel est généré en appliquant la fonction f1() au programme crypté ou décrypté de la mise à jour logiciel ; et
- l'étape 400 au cours de laquelle le mot D4 représentatif du mot secret associé au dispositif 104 est généré en appliquant la fonction f4() au mot secret.

Comme cela a été décrit précédemment, les étapes 202 et 400 sont, bien entendu, interchangeables. Ainsi, il est possible de mettre en oeuvre l'étape 400 avant l'étape 202. Il est aussi possible de mettre en oeuvre les étapes 202 et 400 simultanément.

Le procédé de la figure 5 comprend ensuite une étape 500 (D5 = f5(D1/D4)) au cours de laquelle un mot D5 représentatif des mots D1 et D4 est généré. Le mot D5 est obtenu en appliquant une fonction f5() aux mots D1 et D4, par exemple à la concaténation des mots D1 et D4.

La fonction f5() est par exemple la même fonction que la fonction f1() et/ou la fonction f4(). La fonction f5() est par exemple la même fonction que la fonction f3() de la figure 3. La fonction f5() est par exemple une autre fonction à sens unique. La fonction f5() est par exemple une fonction permettant d'assurer que le mot D5 a une taille inférieure à la concaténation D1/D4 des mots D1 et D4, par exemple ayant la même taille que le mot D1 ou que le mot D4.

Au cours d'une étape 502 (Symkey = KDF(D5)) suivante, la nouvelle clé symétrique SymKey est obtenue en appliquant une fonction de dérivation d'une clé KDF() au mot D5.

Le serveur 102 effectue, avant ou après l'étape 200 de transmission du programme de mise à jour logiciel, les étapes 202, 400, 500 et 502 à partir des mêmes éléments (clés, programme crypté ou décrypté) pour obtenir les mêmes clés.

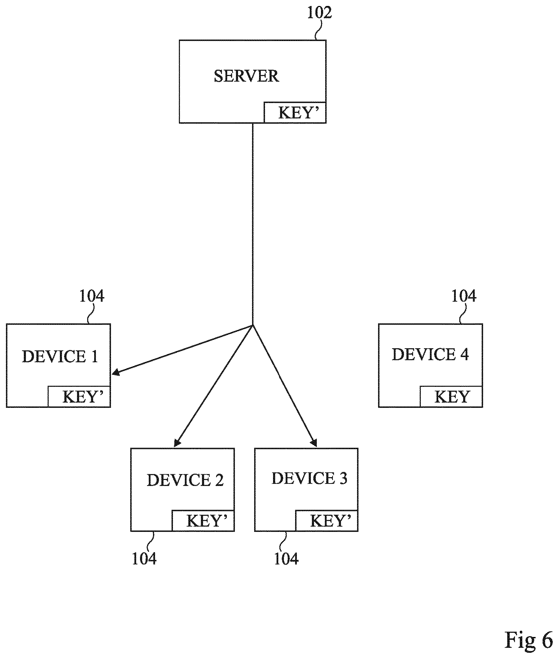

La figure 6 illustre un exemple de situation fonctionnelle d'un système du type de celui de la figure 1.

Dans l'exemple de la figure 6, les dispositifs 104 DEVICE1, DEVICE2 et DEVICE3 ont reçu, par exemple en la téléchargeant, le programme de mise à jour du logiciel. Ces dispositifs ont généré, à l'aide d'un procédé de génération tel que décrits en relation avec la figure 2, 3, 4 ou 5, une nouvelle clé symétrique KEY'. De même, le serveur 102 a généré la nouvelle clé symétrique KEY'.

Cependant, dans cet exemple, le dispositif 104 DEVICE4 n'a pas reçu, ou téléchargé, le programme de mise à jour pendant qu'il était disponible. Cela est par exemple dû à une attaque de pirate perturbant le logiciel. Ainsi, le dispositif 104 a donc la clé symétrique non mise à jour KEY et il ne peut accéder les données transmises par le serveur 102. Cela permet d'empêcher un dispositif dont la sécurité est compromise d'accéder à des données cryptées et de compromettre la sécurité de l'ensemble du système.

Un avantage de certains modes de réalisation, dans lesquelles une nouvelle clé symétrique est générée à partir de la clé générée précédemment, est qu'ils permettent de s'assurer que toutes les mises à jour ont été reçues par le dispositif 104.

Un avantage de certains modes de réalisation, dans lesquels une nouvelle clé est toujours générée à partir de la même valeur secrète est que cela permet de s'assurer que si une clé est découverte par un tiers, par exemple un pirate, la clé suivante sera néanmoins secrète. De plus, la valeur secrète n'est jamais transmise à l'extérieur du dispositif et du serveur, ce qui permet de s'assurer que la valeur secrète n'est pas découverte.

Un avantage des modes de réalisation dans lesquels chaque dispositif a sa propre clé, mise à jour, est que les transmissions entre le serveur 102 et un des dispositifs 104 sont sécurisées par rapport aux autres dispositifs 104. Il n'est donc pas possible pour un dispositif 104 de décrypter un message destiné à un autre dispositif 104.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, il est possible d'ajouter aux modes de réalisation de procédés de génération d'une clé symétrique d'autres étapes, par exemple d'autres étapes de génération de mots. En particulier, il est possible d'utiliser le premier mot D1 avec une combinaison quelconque des mots D1, D2, D3, D4 et D5 pour générer la nouvelle clé de cryptage.

De plus, il est possible d'appliquer des fonctions supplémentaires aux différents mots durant les différents modes de réalisation de procédés de génération d'une clé de cryptage.

Enfin, la mise en oeuvre pratique des modes de réalisation et variantes décrits est à la portée de l'homme du métier à partir des indications fonctionnelles données ci-dessus.

## Revendications

1. Procédé de génération d'une première clé symétrique (SymKey), dans lequel la première clé symétrique est générée par un dispositif électronique (104) en fonction d'un premier mot représentatif d'un programme de mise à jour d'un logiciel et d'une valeur secrète détenue par le dispositif électronique, le procédé comprenant une étape de décryptage du programme de mise à jour d'un logiciel avec une deuxième clé symétrique différente de la première clé symétrique, et une étape de génération du premier mot (D1) représentatif du programme de mise à jour par l'application d'une fonction à sens unique au programme de mise à jour décrypté.

2. Procédé selon la revendication 1, comprenant la réception par le dispositif (104) du programme de mise à jour du logiciel transmis par un serveur (102).

3. Procédé selon la revendication 2, dans lequel le programme de mise à jour est crypté.

4. Procédé selon la revendication 2 ou 3, dans lequel la première clé symétrique est aussi générée par le serveur (102).

5. Procédé selon l'une quelconque des revendications 1 à 4, comprenant une étape de génération d'au moins un deuxième mot (D2, D4), le deuxième mot étant représentatif de la valeur secrète.

6. Procédé selon la revendication 5, dans lequel la clé symétrique est générée en appliquant une fonction de dérivation de clé au premier mot (D1) et à au moins un des deuxièmes mots (D2, D4),

7. Procédé selon la revendication 5, dans lequel la première clé symétrique est générée en appliquant une fonction de dérivation de clé à un troisième mot (D3, D5) représentatif du premier mot et d'un des deuxièmes mots.

8. Procédé selon l'une quelconque des revendications 1 à 7, dans lequel la génération d'un mot (D1, D2, D3, D4, D5) est effectuée par une fonction à sens unique (f1, f2, f3, f4, f5).

9. Procédé selon l'une quelconque des revendications 1 à 8, dans lequel la génération d'un mot est effectuée par une fonction de hachage.

10. Procédé selon l'une quelconque des revendications 1 à 9, dans lequel la valeur secrète est une clé ayant été écrite dans une mémoire non volatile lors de la programmation initiale du logiciel.

11. Procédé selon l'une quelconque des revendications 1 à 9, dans lequel la valeur secrète est une clé ayant été générée lors d'une mise à jour précédente du logiciel.

12. Procédé selon l'une quelconque des revendications 1 à 9, dans lequel la valeur secrète est un identifiant du dispositif.

13. Procédé selon l'une quelconque des revendications 1 à 12, dans lequel la première clé générée n'est pas utilisée pour décrypter le programme de mise à jour.

14. Circuit électronique comprenant des moyens pour mettre en oeuvre le procédé selon l'une quelconque des revendications 1 à 13.

15. Système électronique, comprenant un serveur (102) et au moins un dispositif électronique (104), le serveur (102) et les au moins un dispositif électronique (104) comprenant un circuit selon la revendication 14.

## Patentansprüche

1. Verfahren zum Erzeugen eines ersten symmetrischen Schlüssels (SymKey), bei dem der symmetrische Schlüssel von einer elektronischen Vorrichtung (104) als eine Funktion eines ersten Wortes, das ein Aktualisierungsprogramm für Software repräsentiert, und eines von der elektronischen Vorrichtung gehaltenen geheimen Werts erzeugt wird, wobei das Verfahren einen Schritt aufweist zum Entschlüsseln des Aktualisierungsprogramm für Software mit einem zweiten symmetrischen Schlüssel, der sich vom ersten symmetrischen Schlüssel unterscheidet, und einen Schritt zum Erzeugen eines ersten Wortes (D1), das das Aktualisierungsprogramm repräsentiert, durch Anwenden einer Einwegfunktion auf das entschlüsselte Aktualisierungsprogramm.

2. Verfahren nach Anspruch 1, aufweisend das Empfangen durch die Vorrichtung (104) des Aktualisierungsprogramms für Software, das von einem Server (102) gesendet wurde.

3. Verfahren nach Anspruch 2, wobei das Aktualisierungsprogramm verschlüsselt ist.

4. Verfahren nach Anspruch 2 oder 3, wobei der erste symmetrische Schlüssel ebenfalls von dem Server (102) erzeugt wird.

5. Verfahren nach einem der Ansprüche 1 bis 4, aufweisend einen Schritt zum Erzeugen mindestens eines zweiten Wortes (D2, D4), wobei das zweite Wort den geheimen Wert repräsentiert.

6. Verfahren nach Anspruch 5, wobei der symmetrische Schlüssel durch Anwenden einer Schlüssel-Bypassfunktion auf das erste Wort (D1) und mindestens eines der zweiten Wörter (D2, D4) erzeugt wird.

7. Verfahren nach Anspruch 5, wobei der erste symmetrische Schlüssel durch Anwenden einer Schlüssel-Bypassfunktion auf ein drittes Wort (D3, D5) erzeugt wird, das für das erste Wort und eines der zweiten Wörter repräsentativ ist.

8. Verfahren nach einem der Ansprüche 1 bis 7, wobei die Erzeugung eines Wortes (D1, D2, D3, D4, D5) durch eine Einwegfunktion (f1, f2, f3, f4, f5) erfolgt.

9. Verfahren nach einem der Ansprüche 1 bis 8, wobei die Erzeugung eines Wortes durch eine Hash-Funktion erfolgt.

10. Verfahren nach einem der Ansprüche 1 bis 9, wobei der geheime Wert ein Schlüssel ist, der während der Erstprogrammierung der Software in einen nichtflüchtigen Speicher geschrieben wurde.

11. Verfahren nach einem der Ansprüche 1 bis 9, wobei der geheime Wert ein Schlüssel ist, der während einer vorherigen Aktualisierung der Software generiert wurde.

12. Verfahren nach einem der Ansprüche 1 bis 9, wobei der geheime Wert eine Kennung der Vorrichtung ist.

13. Verfahren nach einem der Ansprüche 1 bis 12, wobei der erzeugte erste Schlüssel nicht zum Entschlüsseln des Aktualisierungsprogramms verwendet wird.

14. Elektronische Schaltung mit Mitteln zum Ausführen des Verfahrens nach einem der Ansprüche 1 bis 13.

15. Elektronisches System, das einen Server (102) und mindestens eine elektronische Vorrichtung (104) aufweist, wobei der Server (102) und die mindestens eine elektronische Vorrichtung (104) eine Schaltung gemäß Anspruch 14 aufweisen.

## Claims

1. A method for generating a first symmetrical key (SymKey), in which the symmetrical key is generated by an electronic device (104) as a function of a first word representative of a program for updating software and of a secret value held by the electronic device, the method comprising a step of decryption of the program for updating software with a second symmetrical key, different form the first symmetrical key, and a step for generating a first word (D1) representative of the program for updating software by applying a one-way function to the decrypted update program.

2. The method according to claim 1, comprising the reception by the device (104) of the program for updating software of the software sent by a server (102).

3. The method according to claim 2, wherein the update program is encrypted.

4. The method according to claim 2 or 3, wherein the first symmetrical key is also generated by the server (102).

5. The method according to any one of claims 1 to 4, comprising a step for generating at least one second word (D2, D4), the second word being representative of the secret value.

6. The method according to claim 5, wherein the symmetrical key is generated by applying a key bypass function to the first word (D1) and at least one of the second words (D2, D4).

7. The method according to claim 5, wherein the first symmetrical key is generated by applying a key bypass function to a third word (D3, D5) representative of the first word and one of the second words.

8. The method according to any one of claims 1 to 7, wherein the generation of a word (D1, D2, D3, D4, D5) is done by a one-way function (f1, f2, f3, f4, f5).

9. The method according to any one of claims 1 to 8, wherein the generation of a word is done by a hash function.

10. The method according to any one of claims 1 to 9, wherein the secret value is a key having been written in a non-volatile memory during the initial programming of the software.

11. The method according to any one of claims 1 to 9, wherein the secret value is a key having been generated during a previous update of the software.

12. The method according to any one of claims 1 to 9, wherein the secret value is an identifier of the device.

13. The method according to any one of claims 1 to 12, wherein the generated first key is not used to decrypt the program for updating software.

14. An electronic circuit comprising means for carrying out the method according to any one of claims 1 to 13.

15. An electronic system, comprising a server (102) and at least one electronic device (104), the server (102) and the at least one electronic device (104) comprising a circuit according to claim 14.
